(19) Europäisches Patentamt
European Patent Office
Office européen des brevets

(11) Veröffentlichungsnummer : **0 179 290**
**B1**

(12) # EUROPÄISCHE PATENTSCHRIFT

(45) Veröffentlichungstag der Patentschrift : **02.03.88**

(21) Anmeldenummer : **85112071.7**

(22) Anmeldetag : **24.09.85**

(51) Int. Cl.⁴ : **C 08 L 69/00**, C 08 L 25/08, C 08 L 33/12 // (C08L69/00, 51:04, 25:08, 33:12),(C08L25/08, 69:00, 51:04, 33:12),(C08L33/12, 69:00, 51:04, 25:08)

(54) **Thermoplastische Formmassen mit verbesserter Wärmeformbeständigkeit.**

(30) Priorität : **05.10.84 DE 3436454**

(43) Veröffentlichungstag der Anmeldung : **30.04.86 Patentblatt 86/18**

(45) Bekanntmachung des Hinweises auf die Patenterteilung : **02.03.88 Patentblatt 88/09**

(84) Benannte Vertragsstaaten : **DE FR GB IT NL**

(56) Entgegenhaltungen :
**EP-A- 0 062 838**
**GB-A- 1 558 835**
**US-A- 4 218 544**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Eichenauer, Herbert, Dr.**
**Goethestrasse 71**
**D-4047 Dormagen 1 (DE)**
Erfinder : **Kress, Hans-Jürgen, Dr.**
**Scheiblerstrasse 111**
**D-4150 Krefeld 1 (DE)**
Erfinder : **Ott, Karl-Heinz, Dr.**
**Paul-Klee-Strasse 54**
**D-5090 Leverkusen 1 (DE)**
Erfinder : **Peters, Horst, Dr.**
**Winterberg 25**
**D-5090 Leverkusen 3 (DE)**
Erfinder : **Buekers, Josef**
**Kneinstrasse 58a**
**D-4150 Krefeld 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 179 290 B1

Jouve, 18, rue St-Denis, 75001 Paris, France

**Beschreibung**

Gegenstand der vorliegenden Erfindung ist die Verwendung eines Copolymerisats aus

a) 95 bis 50 Gew.-% eines Vinylaromaten und
b) 5 bis 50 Gew.-% eines ethylenisch ungesättigten Nitrilverbindung und/oder eines Esters der (Meth) Acrylsäure,

das ein Molekulargewicht $\bar{M}w$ (Gewichtsmittel) von $2 \cdot 10^6$ bis $1 \cdot 10^7$, vorzugsweise von $2 \cdot 10^6$ bis $5 \cdot 10^6$ hat, in Mengen von 0,5 bis 5 Gew.-Teilen, bezogen jeweils auf 100 Gew.-Teile Mischung aus Polycarbonaten, Pfropfpolymerisaten und Copolymerisaten, zur Verbesserung der Wärmeformbeständigkeit von thermoplastischen Mischungen enthaltend Polycarbonate, Pfropfpolymerisate und Copolymerisate.

Ein weiterer Gegenstand der Erfindung sind thermoplastische Mischungen enthaltend

A) 20-75 Gew.-Teile eines thermoplastischen Polycarbonates,
B) 10-50 Gew.-Teile eines Pfropfpolymerisates aus
B)1) 5 bis 90 Gew.-Teilen, vorzugsweise 30 bis 80 Gew.-Teilen einer Mischung aus
B)1)1) 50 bis 90 Gew.-% Styrol, α-Methylstyrol, kernsubstituiertem Styrol, Methylmetacrylat oder Mischungen daraus, und
B)1)2) 50 bis 5 Gew.-% (Meth)Acrylnitril, Methylmethacrylat, Maleinsäureanhydrid, N-substituiertem Maleinimid oder Mischungen daraus,

auf

B)2) 95 bis 10 Gew.-Teile, vorzugsweise 70 bis 20 Gew.-Teile eines Kautschuks mit einer Glastemperatur TG ≤ 10 °C, und
C) 10 bis 70 Gew.-Teile eines thermoplastischen Copolymerisats mit einem $\bar{M}w$ von 15 000 bis 200 000 (gemessen durch Lichtstreuung oder Sedimentation) aus
C)1) 50 bis 95 Gew.-% Styrol, α-Methylstyrol, kernsubstituiertem Styrol, Methylmethacrylat oder Mischungen daraus, und
C)2) 50 bis 5 Gew.-% (Meth)Acrylnitril, Methylmethacrylat, Maleinsäureanhydrid, N-substituiertem Maleinimid oder Mischungen daraus,

die dadurch gekennzeichnet sind, daß sie ein Copolymerisat D) aus

a) 95 bis 50 Gew.-% eines Vinylaromaten und
b) 5 bis 50 Gew.-% einer ethylenisch ungesättigten Nitrilverbindung und/oder eines Esters der (Meth)Acrylsäure, mit einem $\bar{M}w$ (Gewichtsmittelmolekulargewicht) von $2 \cdot 10^6$ bis $1 \cdot 10^7$, vorzugsweise von $2 \cdot 10^6$ bis $5 \cdot 10^6$ in Mengen von 0,5 bis 5 Gew.-Teilen,

bezogen jeweils auf 100 Gew.-Teile Mischung aus Polycarbonaten A) Pfropfpolymerisaten B) und beiden Copolymerisaten C) und D) enthalten.

Die erfindungsgemäßen Mischungen aus Polycarbonaten, Pfropfpolymerisaten und Copolymerisaten können noch die in der Polycarbonat- oder Pfropfpolymerisat- oder Copolymerisatchemie üblichen Zusatzstoffe, wie Flammschutzmittel, Stabilisatoren, Pigmente, Fließmittel, Entformungsmittel und/oder Antistatika in den üblichen Mengen enthalten.

In der DE-OS 1 964 915 wird die Verwendung entsprechender Copolymerisate in thermoplastischen Styrolpolymeren beschrieben, wobei als termoplastische Styrolpolymere auch Styrol-Acrylnitril-Copolymere oder Pfropfpolymere von Acrylnitril und Styrol auf Polybutadienelastomere subsumiert sind (Seite 7 der DE-OS). Derartige Mischungen, die verträglich sein müssen, haben eine bessere Verarbeitbarkeit, insbesondere bezüglich des Reckens oder Dehnens bei der Thermoverformung von Folien, und eine bessere Schaumfähigkeit bei den verschiedenen Schäumverfahren. Gemäß GB-PS 1 558 835 können derartige Copolymerisate als polymere Modifikatoren zur Verbesserung der mechanischen Eigenschaften von anderen Polymeren eingesetzt werden (Seite 3, Zeilen 114/115).

Gemäß JA 57 117 505 der Sumitomo Chem. KK vom 12.1.1981 sind derartige hochmolekulare Polymere ebenfalls als Mischungsbestandteile zur Verbesserung der mechanischen Eigenschaften geeignet.

Ein Hinweis auf die verbesserte Wärmeformbeständigkeit der erfindungsgemäßen Abmischungen ist diesen Literaturstellen unseres Erachtens nicht zu entnehmen.

Erfindungsgemäß geeignete thermoplastische aromatische Polycarbonate gemäß Komponente A) sind Homo- und Copolycarbonate aus einem oder mehreren der folgenden Diphenole, ausgewählt aus Hydrochinon, Resorcin, Dihydroxydiphenylen, Bis-(hydroxyphenyl)-alkanen, -cycloalkanen, -sulfiden, -ethern, -ketonen, -sulfoxiden, -sulfonen und α,α'-Bis-(hydroxyphenyl)-diisopropylbenzolen.

Erfindungsgemäß bevorzugte, thermoplastische, aromatische Polycarbonate gemäß Komponente A)

sind solche auf Basis der Diphenole der Formel (I),

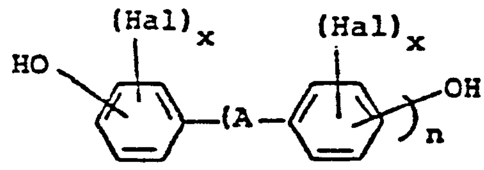

(I)

worin A eine Einfachbindung, ein $C_1$-$C_5$-Alkylen, ein $C_2$-$C_5$-Alkyliden, ein $C_5$-$C_6$-Cycloalkyliden, —S— oder —$SO_2$—, Hal, Chlor oder Brom, x 0, 1 oder 2 und « n » 1 oder null sind.

Die Diphenole der Formel (I) sind entweder literaturbekannt oder nach literaturbekannten Verfahren herstellbar.

Die Herstellung der erfindungsgemäß geeigneten Polycarbonate gemäß Komponente A) ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Die erfindungsgemäß geeigneten Polycarbonate gemäß Komponente A) haben mittlere Gewichtsmittelmolekulargewichte ($\bar{M}w$, gemessen beispielsweise durch Ultrazentrifugation oder Streulichtmessung) von 10 000 bis 200 000, vorzugsweise 20 000 bis 80 000.

Geeignete Diphenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Die erfindungsgemäß geeigneten Polycarbonate gemäß Komponente A) können in bekannter Weise verzweigt sein, und zwar vorzugsweise durch den Einbau von 0,05 bis 2,2 Mol-%, bezogen auf die Summe der ein gesetzten Diphenole, an drei- oder mehr als dreifunktionellen Verbindungen, beispielsweise solchen mit drei oder mehr als drei phenolischen OH-Gruppen.

Zur Herstellung der Pfropfpolymerisate gemäß Komponente B) geeignete Kautschuke sind insbesondere Polybutadien, Butadien/Styrol-Copolymerisate mit bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat oder Ethylmethacrylat). Weitere geeignete Kautschuke sind beispielsweise Polyisopren oder Polychloropren. Geeignet sind weiterhin Alkylacrylatkautschuke auf der Basis von $C_1$-$C_8$-Alkylacrylate, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomerer enthalten. Solche Vernetzer sind z. B. Alkylendioldi(meth)-acrylate, Polyesterdi-(meth)-acrylate, Divinylbenzol, Tri-Vinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjungierten Dienen, wie Polybutadien, oder ein Copolymerisat eines konjugierten Diens mit einem ethylenisch ungesättigten Monomer, wie Styrol und/oder Acrylnitril als Kern enthalten. Andere geeignete Kautschuke sind beispielsweise EPDM-Kautschuke, also Kautschuke aus Ethylen, Propylen und einem unkonjugierten Dienmonomer.

Bevorzugte Kautschuke zur Herstellung der Pfropfpolymerisate (B) sind Dienmonomer- und Alkylacrylatkautschuke.

Die Kautschuke liegen in den Pfropfpolymerisaten B) in Form wenigstens partiell vernetzter Teilchen einer mittleren Teilchengröße von 0,09 bis 5 µm, insbesondere 0,1 bis 1 µm vor. Die Propfpolymerisate B) werden durch radikalische Pfropfcopolymerisation der eingangs definierten Monomerengemische aus B)1)1) und B)1)2) in Gegenwart der zu pfropfenden Kautschuke B)2) hergestellt und sind durchweg bekannt. Bevorzugte Herstellungsverfahren für die Pfropfpolymerisate B) sind Emulsions-, Lösungs-, Masse- oder Suspensionspolymerisation. Besonders bevorzugte Pfropfpolymerisate B) sind die sogenannten ABS-Polymerisate. Als kernsubstituierte Styrole seien Halogenstyrole und p-Methylstyrol erwähnt.

Bevorzugte Copolymerisate gemäß Komponente C) sind solche aus wenigstens einem Monomeren aus der Reihe Styrol, α-Methylstyrol, Halogenstyrol, Methylmethacrylat gemäß C)1) mit wenigstens einem Monomeren aus der Reihe Acrylnitril, Methacrylnitril, Methylmetracrylat, Maleinsäureanhydrid gemäß C)2).

Copolymerisate gemäß Komponente C) entstehen häufig bei der Pfropfpolymerisation zur Herstellung der Komponente B) als Nebenprodukte, besonders dann, wenn große Mengen Monomere auf kleine

Mengen Kautschuk gepfropft werden.

Die erfindungsgemäß einzusetzende Menge an Copolymerisate C) von 10 bis 70 Gew.-Teilen, bezogen auf 100 Gew.-Teile auf A) + B) + C) + D), bezieht diese Nebenprodukte der Pfropfpolymerisation nicht mit ein.

Die Copolymerisate gemäß Komponente C) sind harzartig, thermoplastisch und kautschukfrei. Besonders bevorzugte Copolymerisate C) sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat.

Besonders bevorzugte Gewichtsverhältnisse im thermoplastischen Copolymerisat C) sind 60 bis 80 Gew.-% C)1) und 40 bis 20 Gew.-% C)2).

Die Copolymerisate gemäß Komponente C) sind bekannt und lassen sich durch radikalische Polymerisation, insbesondere durch Emulsions-, Suspensions-, Lösungs- oder Massepolymerisation herstellen. Die Copolymerisate gemäß Komponente C) besitzen Molekulargewichte $\bar{M}w$ (Gewichtsmittel, ermittelt durch Lichtstreuung oder Sedimentation) zwischen 15 000 und 200 000.

Die erfindungsgemäß einzusetzende Copolymerisatkomponenten D) sind thermoplastisch und enthalten als Vinylaromaten vorzugsweise Styrol, α-Methylstyrol, kernsubstituiertes Styrol oder Mischungen dieser Vinylaromaten, als ethylenisch ungesättigte Nitrilverbindung Methacrylnitril oder Acrylnitril und als Ester der (Meth)Acrylsäure Methylacrylat oder Methylmethacrylat.

Derartige Copolymerisate D) sind bekannt (Siehe beispielsweise DE-OS 1 964 915, JA 57-117 505, JA 52-084 269 und GB-PS 1 558 835), beziehungsweise nach den aus diesen Literaturstellen bekannten Verfahren erhältlich, oder nach dem im Beispiel 1 dieser Anmeldung beschriebenen Verfahren herstellbar.

Die Molekulargewichte der Copolymerisate D) wurden über Gelchromatographie (in $CH_2Cl_2$ bei Raumtemperatur) unter Nutzung der universellen Eichung nach Benoit beziehungsweise über Lichtstreumessungen von Lösungen der Polymeren in DMF mittels eines Fica 50-Streulichtgerätes der Firma ARL (Brechungsindexinkrement dn/dc = 0,145) ermittelt. Die Molekulargewichte der erfindungsgemäßen Copolymerisate D) stellen Gewichtsmittelwerte dar.

Die erfindungsgemäßen Mischungen, enthaltend die Komponenten A), B), C) und D) und gegebenenfalls die üblichen Zusatzstoffe wir Flammschutzmittel, Stabilisatoren, Pigmente, Fließmittel, Entformungsmittel und/oder Antistatika werden hergestellt, indem man die jeweiligen Bestandteile in bekannten Weise simultan oder sukzessive, bei Raumtemperatur oder bei höherer Temperatur vermischt und bei Temperaturen von 200 °C bis 300 °C in gebräuchlichen Aggregaten, wie Innenknetern, Extruden oder Doppelwellenschnecken schmelzcompoundiert oder schmelzextrudiert.

Die Formmassen der vorliegenden Erfindung können zur Herstellung von Formkörpern jeder Art verwendet werden, wobei übliche Herstellungsweisen benutzt werden können, insbesondere können Formkörper durch Spritzguß hergestellt werden. Beispiele für herstellbare Formkörper sind Gehäuseteile jeder Art (z. B. für Haushaltsgeräte wie Saftpressen, Kaffeemaschinen, Mixer) oder Abdeckplatten für den Bausektor und Teile für den Kfz-Sektor. Die erfindungsgemäßen Formmassen werden außerdem auf dem Gebiet der Elektrotechnik eingesetzt, weil sie sehr gute elektrische Eigenschaften haben.

Eine weitere Form der Verarbeitung der erfindungsgemäßen Formmassen ist die Herstellung von Formkörpern durch Tiefziehen aus vorher nach bekannten Verfahren hergestellten Platten oder Folien.

In dieser Anmeldung bedeutet Teilchengröße immer mittlerer Teilchendurchmesser $d_{50}$, ermittelt durch Ultrazentrifugenmessungen nach W. Scholtan et al. Colloids u. Z. Polymere 250 (1972) 782-796.

## Beispiele

Eingesetzte Komponenten

Eingesetztes Polycarbonat A) :

Lineares Polycarbonat auf Basis Bisphenol A mit einer Lösungsviskosität von 1,28, gemessen in $CH_2Cl_2$ bei 25 °C und in einer Konzentration von 0,5 g/100 ml.

Pfropfpolymerisat B) :

SAN-Pfropfpolymerisat von 50 % Styrol/Acrylnitril-Gemisch (im Gew.-Verhältnis von 72 : 78) auf 50 % teilchenförmiges Polybutadien mit einer mittleren Teilchengröße ($d_{50}$) von 0,4 μm, erhalten durch Emulsionspolymerisation.

Copolymerisat C) :

Styrol/Acrylnitril-Copolymerisat mit einem Styrol/Acrylnitril-Verhältnis von 70 : 30 und einer Grenzviskosität von [η] = 0,75 dl/g (Messung in Dimethylformamid bei 20 °C).

Herstellung eines hochmolekularen Copolymerisates D) :

In einem Reaktor 360 g Styrol, 140 g Acrylnitril und 30 g 1-Octadecanol unter Rühren zusammen in 4 090 g Wasser dispergiert, auf 58 °C erwärmt mit 7,5 g Kaliumpersulfat (gelöst in 660 g Wasser) versetzt.

Nach 30-minütigem Rühren bei dieser Temperatur wird zu der Reaktionsmischung innerhalb von 4 Stunden ein Gemisch aus 3 240 g Styrol und 1 260 g Acrylnitril und über einen separaten Zulauf eine Lösung von 25 g der Natriumsalzes von n-Dodecylbenzolsulfonsäure in 1 250 g Wasser zudosiert. Nach einer Nachreaktionszeit wird der Latex mit Magnesiumsulfat/Essigsäure koaguliert und das erhaltene Polymerpulver bei 70 °C im Vakuum getrocknet. Das so hergestellte Copolymerisat besitzt ein Molekulargewicht ($\bar{M}w$) von $2{,}5 \cdot 10^6$.

Die Bestimmung der Wärmeformbeständigkeit nach Methode Vicat (B) erfolgte gemäß DIN 53 460/ISO 360.

Die Bestimmung der Kerbschlagzähigkeit erfolgte in Anlehnung an DIN 53 452/ISO R 179 an Flachstäben (50 mm × 6 mm × 4 mm) mit einer V-förmigen Kerbe der Kerbtiefe 2,7 mm.

| Beispiele | | (Vergleich) | 1 | 2 | 3 |
|---|---|---|---|---|---|
| Polycarbonat A) | Gew.-Tl. | 45 | 45 | 45 | 45 |
| Pfropfpolymerisat B) | " | 33 | 33 | 33 | 33 |
| Copolymerisat C) | " | 22 | 21 | 19 | 17 |
| Copolymerisat D) | " | - | 1 | 3 | 5 |
| Kerbschlagzähigkeit (Raumtemperatur) | kJ/m² | 31 | 34 | 29 | 30 |
| Wärmeformbeständigkeit (Vicat B) | °C | 113 | 119 | 116 | 117 |

**Patentansprüche**

1. Verwendung eines Copolymerisats aus

a) 95 bis 50 Gew.-% eines Vinylaromaten und

b) 5 bis 50 Gew.-% einer ethylenisch ungesättigten Nitrilverbindung und/oder eines Esters der (Meth)Acrylsäure,

das ein Molekulargewicht $\bar{M}w$ (Gewichtsmittel) von $2 \cdot 10^6$ bis $1 \cdot 10^7$ hat, in Mengen von 0,5 bis 5 Gew.-Teilen, bezogen jeweils auf 100 Gew.-Teile Mischung aus Polycarbonaten, Pfropfpolymerisaten und Copolymerisaten, zur Verbesserung der Wärmeformbeständigkeit von thermoplastischen Mischungen enthaltend Polycarbonate, Pfropfpolymerisate und Copolymerisate.

2. Verwendung eines Copolymerisats mit $\bar{M}w$ (Gewichtsmittel) von $2 \cdot 10^6$ bis $5 \cdot 10^6$ gemäß Anspruch 1.

3. Thermoplastische Mischungen enthaltend

A) 20-75 Gew.-Teile eines thermoplastischen Polycarbonates,

B) 10-50 Gew.-Teile eines Pfropfpolymerisates aus

B)1) 5 bis 90 Gew.-Teilen, vorzugsweise 30 bis 80 Gew.-Teilen einer Mischung aus

B)1)1) 50 bis 90 Gew.-% Styrol, α-Methylstyrol, kernsubstituiertem Styrol, Methylmethacrylat oder Mischungen daraus, und

B)1)2) 50 bis 5 Gew.-% (Meth)Acrylnitril, Methylmethacrylat, Maleinsäureanhydrid, N-substituiertem Maleinimid oder Mischungen daraus,

auf

B)2) 95 bis 10 Gew.-Teile, vorzugsweise 70 bis 20 Gew.-Teile eines Kautschuks mit einer Glastemperatur $TG \leq 10$ °C, und

C) 10 bis 70 Gew.-Teile eines thermoplastischen Copolymerisats mit einem $\bar{M}w$ von 15 000 bis 200 000 (gemessen durch Lichtstreuung oder Sedimentation) aus

C)1) 50 bis 95 Gew.-% Styrol, α-Methylstyrol, kernsubstituiertem Styrol, Methylmethacrylat oder Mischungen daraus, und

C)2) 50 bis 5 Gew.-% (Meth)Acrylnitril, Methylmethacrylat, Maleinsäureanhydrid, N-substituiertem Maleinimid oder Mischungen daraus,

die dadurch gekennzeichnet sind, daß sie ein Copolymerisat D) aus

a) 95 bis 50 Gew.-% eines Vinylaromaten und

b) 5 bis 50 Gew.-% einer ethylenisch ungesättigten Nitrilverbindung und/oder eines Esters der

(Meth)Acrylsäure, mit einem $\bar{M}w$ (Gewichtsmittelmolekulargewicht), von $2 \cdot 10^6$ bis $1 \cdot 10^7$, in Mengen von 0,5 bis 5 Gew.-Teilen,
bezogen jeweils auf 100 Gew.-Teile Mischung aus Polycarbonaten A) Pfropfpolymerisaten B) und beiden Copolymerisaten C) und D) enthalten.

4. Thermoplastische Mischungen gemäß Anspruch 3, dadurch gekennzeichnet, daß das Copolymerisat D) ein $\bar{M}w$ (Gewichtsmittelmolekulargewicht) von $2 \cdot 10^6$ bis $5 \cdot 10^6$ hat.

**Claims**

1. Use of a copolymer of
   a) 95 to 50 % by weight of a vinylaromatic and
   b) 5 to 50 % by weight of an ethylenically unsaturated nitrile compound and/or an ester of (meth)-acrylic acid,

which has a molecular weight $\bar{M}w$ (weight-average) of $2 \times 10^6$ to $1 \times 10^7$ in amounts of 0.5 to 5 parts by weight, in each case based on 100 parts by weight of a mixture of polycarbonates, graft polymers and copolymers, for increasing the heat distorsion point of thermoplastic mixtures containing polycarbonates, graft polymers and copolymers.

2. Use of a copolymer with an $\bar{M}w$ (weight-average) of $2 \times 10^6$ to $5 \times 10^6$ according to Claim 1.

3. Thermoplastic mixtures containing
   A) 20-75 parts by weight of a thermoplastic polycarbonate,
   B) 10-50 parts by weight of a graft polymer of
   B)1) 5 to 90 parts by weight, preferably 30 to 80 parts by weight, of a mixture of
   B)1)1) 50 to 90 % by weight of styrene, α-methylstyrene, nuclearsubstituted styrene, methyl methacrylate or mixtures thereof and
   B)1)2) 50 to 5 % by weight of (meth)acrylonitrile, methyl methacrylate, maleic anhydride, N-substituted maleimide or mixtures thereof, on
   B)2) 95 to 10 parts by weight, preferably 70 to 20 parts by weight, of a rubber with a glass transition temperature $TG < 10$ °C, and
   C) 10 to 70 parts by weight of a thermoplastic copolymer with an $\bar{M}w$ of 15,000 to 200,000 (measured by light scattering or sedimentation) of
   C)1) 50 to 95 % by weight of styrene, α-methylstyrene, nuclear-substituted styrene, methyl methacrylate of mixtures thereof and
   C)2) 50 to 5 % by weight of (meth)acrylonitrile, methyl methacrylate, maleic anhydride, N-substituted maleimide or mixtures thereof,

characterized in that they contain a copolymer D) of
   a) 95 to 50 % by weight of a vinylaromatic and
   b) 5 to 50 % by weight of an ethylenically unsaturated nitrile compound and/or of an ester of (meth)acrylic acid, with an $\bar{M}w$ (weight-average molecular weight) of $2 \times 10^6$ to $1 \times 10^7$ in 0.5 to 5 parts by weight,

in each case based on 100 parts by weight of a mixture of polycarbonates A), graft polymers B) and the two copolymers C) and D).

4. Thermoplastic mixtures according to Claim 3, characterized in that the copolymer D) has an $\bar{M}w$ (weight-average molecular weight) of $2 \times 10^6$ to $5 \times 10^6$.

**Revendications**

1. Utilisation d'un produit de copolymérisation
   a) de 95 à 50 % en poids d'un composé aromatique vinylique et
   b) de 5 à 50 % en poids d'un composé nitrilique à non-saturation éthylénique et/ou d'un ester d'acide (méth)acrylique,

qui a un poids moléculaire $\bar{M}p$ (moyenne en poids) de $2 \cdot 10^6$ à $1 \cdot 10^7$, en quantités de 0,5 à 5 parties en poids, dans chaque cas pour 100 parties en poids de mélange de polycarbonates, de polymères greffés et de copolymères, pour améliorer la stabilité dimensionnelle à chaud de mélanges thermoplastiques contenant des polycarbonates, des polymères greffés et des copolymères.

2. Utilisation d'un produit de copolymérisation de poids moléculaire $\bar{M}p$ (moyenne en poids) de $2 \cdot 10^6$ à $5 \cdot 10^6$ suivant la revendication 1.

3. Mélanges thermoplastiques contenant
   A) 20 à 75 parties en poids d'un polycarbonate thermoplastique,
   B) 10 à 50 parties en poids d'un polymère greffé obtenu à partir de
   B)1) 5 à 90 parties en poids, de préférence 30 à 80 parties en poids d'un mélange de
   B)1)1) 50 à 90 % en poids de styrène, d'α-méthylstyrène, de styrène substitué sur le noyau, de méthacrylate de méthyle ou de leurs mélanges et de
   B)1)2) 50 à 5 % en poids de (méth)acrylonitrile, de méthacrylate de méthyle, d'anhydride d'acide

maléique, de maléimide substitué sur l'atome d'azote ou de leurs. mélanges,
sur

B)2) 95 à 10 parties en poids, de préférence 70 à 20 parties en poids d'un caoutchouc ayant une température de transition vitreuse TG inférieure ou égale à 10 °C et

C) 10 à 70 parties en poids d'un copolymère thermoplastique de poids moléculaire $\bar{M}p$ allant de 15 000 à 200 000 (mesuré par diffusion de la lumière ou par sédimentation) formé de

C)1) 50 à 95 % en poids de styrène, d'α-méthylstyrène, de styrène substitué sur le noyau, de méthacrylate de méthyle ou leurs mélanges, et

C)2) 50 à 5 % en poids de (méth)acrylonitrile, de méthacrylate de méthyle, d'anhydride maléique, de maléimide substitué sur l'atome d'azote ou leurs mélanges,
qui sont caractérisés en ce qu'ils contiennent un copolymère D) formé de

a) 95 à 50 % en poids d'un composé aromatique vinylique et de

b) 5 à 50 % en poids d'un composé nitrilique à non-saturation éthylénique et/ou d'un ester d'acide (méth)acrylique, avec une valeur $\bar{M}p$ (moyenne en poids du poids moléculaire) de $2 \cdot 10^6$ à $1 \cdot 10^7$, en quantités de 0,5 à 5 parties en poids,
dans chaque cas pour 100 parties en poids de mélange de polycarbonates A), de polymères greffés B) et des deux copolymères C) et D).

4. Mélanges thermoplastiques suivant la revendication 3, caractérisés en ce que le copolymère D) a une valeur $\bar{M}p$ (moyenne en poids du poids moléculaire) de $2 \cdot 10^6$ à $5 \cdot 10^6$.